## Europäisches Patentamt

## European Patent Office

## Office européen des brevets

(11) Veröffentlichungsnummer: **0 316 544**

**A1**

# (12) EUROPÄISCHE PATENTANMELDUNG

(21) Anmeldenummer: 88115688.9

(22) Anmeldetag: 23.09.88

(51) Int. Cl.⁴: **H04B 7/08**

(30) Priorität: 31.10.87 DE 3736969

(43) Veröffentlichungstag der Anmeldung:
**24.05.89 Patentblatt 89/21**

(84) Benannte Vertragsstaaten:
**DE FR GB IT SE**

(71) Anmelder: **Richard Hirschmann**
**Radiotechnisches Werk**
**Richard-Hirschmann-Strasse 19 Postfach 110**
**D-7300 Esslingen a.N.(DE)**

(72) Erfinder: **Buck, Walter, Dr.**
**Steinwaldstrasse 90**
**D-7000 Stuttgart 70(DE)**
Erfinder: **Schenkyr,Dieter**
**Lessingstrasse 30**
**D-7312 Kirchheim(DE)**

(74) Vertreter: **Stadler, Heinz, Dipl.-Ing.**
**Richard-Hirschmann-Strasse 19 Postfach 110**
**D-7300 Esslingen a.N.(DE)**

(54) **Verfahren zur Dimensionierung von Antennen-Empfangssystemen für mobilen Empfang.**

㉗ Das angegebene Verfahren zur Dimensionierung von Antennen-Empfangssystemen für mobilen Empfang, insbesondere für Rundfunkempfang in Kraftfahrzeugen, mit mehreren einzelnen Empfangsantennen (1-1 bis 1-3), besteht darin, die Richtdiagramme der Einzelantennen in einem festen Meßfeld zu messen, die Richtdiagramme durch Fourier-Transformation in ebenen Feldmoden-Vektoren auszudrücken, daraus ein orthogonales, normiertes Basissystem abzuleiten und die sich dabei ergebenden Matrix-Koeffizienten zur Dimensionierung der Additions-matrix (4) heranzuziehen. Dieses Verfahren unterscheidet sich gegenüber herkömmlichen Diversity-Verfahren sehr vorteilhaft dadurch, daß keine aufwendigen und langwierigen Meßfahrten zur empirischen Ermittlung der Matrix-Koeffizienten erforderlich sind. Darüber hinaus ist eine bessere Unterdrückung von Mehrwege-Empfangs-störungen möglich.

Fig. 3

EP 0 316 544 A1

## Verfahren zur Dimensionierung von Antennen-Empfangssystemen für mobilen Empfang

Die Erfindung betrifft ein Verfahren zur Dimensionierung von Antennen-Empfangssystemen für mobilen Empfang mit mehreren einzelnen Empfangsantennen und einer Schaltungsanordnung, die mittels einer Additionsmatrix Linearkombinationen der von den einzelnen Antennen abgegebenen Spannungen erzeugt.

Ein Antennen-Empfanssystem dieser Art ist aus der EP-A2-0 201 977 bekannt. Dieses Empfangsverfahren, auch unter dem Begriff Antennendiversity-System bekannt, wird insbesondere für den Rundfunkempfang in Kraftfahrzeugen eingesetzt, um unzureichende Empfangsverhältnisse durch Störungen aufgrund von Mehrwegeempfang zu vermeiden.

Linearkombinationen der von den einzelnen Antennen abgegebenen Spannungen werden dadurch erzeugt, daß die Signale in einer Additionsmatrix miteinander kombiniert werden, nachdem jede von den einzlnen Antennen abgegebene Spannung in der Amplitude gewichtet und in der Phase mit Hilfe eines Phasenschiebers verändert wird. Zur Bestimmung der Wichtungen der Amplituden und der Einstellung der Phasenschieber werden Testfahrten unternommen, während denen Messungen vorgenommen werden, aus denen die Wichtungs- und/ oder Phasenschieber-Koeffizienten ermittelt werden. Die Festlegung der besagten Koeffizienten erfolgt also rein empirisch. Dies hat den Nachteil, daß für jeden Fahrzeugtyp und für jede Kombination und Gestaltung der am Fahrzeug angebrachten Antennen mittels meßfahrten und nachfolgender Auswertung der empirisch gemessenen Störungskorrelationen die Matrix-Koeffizienten ermittelt werden müssen. Ersichtlich ist die Ermittlung der Matrix-Koeffizienten langwierig und aufwendig. Darüber hinaus ist man auch bei größter Sorgfalt und einer großen Anzahl von Messungen nicht sicher, ob die optimalen Matrix-Koeffizienten gewonnen werden konnten. Ein weiterer erheblicher Nachteil besteht darin, daß die sich aus der Auswertung der Meßfahrten ergebenden Matrix-Koeffizienten zwar für die durchfahrene Strecke relativ gut, jedoch für andere Fahrstrecken gerade nicht optimal zu sein brauchen. Durch die empirisch gewonnenen Matrix-Koeffizienten sind die für den Umschaltvorgang im Diversity-System erforderlichen Kriterien komplizierter als dies nötig wäre. Darüber hinaus treten dadurch Schwierigkeiten auf, daß Antennen mit gutem Wirkungsgrad auch im gestörten Zustand höhere Signalpegel abgeben können als gänzlich ungestörte Antennen, die einen schlechteren Wirkungsgrad aufweisen.

Der Erfindung liegt daher die Aufgabe zugrunde, ein Verfahren zur Dimensionierung von Antennen-Empfangssystemen der eingangs genannten Art anzugeben, mit dem der Empfang bei geringem Aufwand verbessert werden kann, wobei es insbesondere auch möglich ist, die Koeffizienten der Additionsmatrix ohne aufwendige und langwierige Meßfahrten in nicht empirischer Weise zu bestimmen.

Ausgehend von dem bekannten, zuvor genannten Antennen-Diversity-System wird die gestellte Aufgabe dadurch gelöst, daß die Horizontal-Richtdiagramme aller Einzelantennen in einem festen Meßfeld als komplexe absolute Größen gemessen werden, die Richtdiagramme durch Fourier-Analyse in ebenen Feldmoden-Vektoren ausgedrückt werden, aus den in dieser Weise ermittelten Feldmoden-Vektoren ein orthogonales, normiertes Basissystem abgeleitet wird, und die sich ergebenden Matrix-Koeffizienten zur Dimensionierung der Additionsmatrix verwendet werden.

Mit der vorliegenden Erfindung ist also ein Verfahren zur Dimensionierung von Antennen-Empfangssystemen geschaffen bei dem keinerlei Meß-oder Testfahrten mehr erforderlich sind, so daß die Einrichtung des An tennen-Empfangssystems und die Ermittlung der Matrix-Koeffizienten auf sehr einfache, schnelle und kostengünstige Weise erfolgen kann. Darüber hinaus sind die ermittelten Matrix-Koeffizienten im Gegensatz zu herkömmlichen Diversity-Systemen, bei denen bestimmte Strecken für die Meßfahrten durchfahren werden, unabhängig von einer bestimmten Fahrstrecke.

Aufgrund des orthogonalen, normierten Basissystems ist im Gegensatz zu den herkömmlichen Diversity-Systemen die Antenne mit größter Amplitude mit sehr großer Wahrscheinlichkeit auch am wenigsten gestört. Im Falle, daß die Basisvektoren Antennen mit hoher Richtwirkung beschreiben, gilt diese Tatsache auch für größere Bandbreiten.

Bekanntermaßen sollten die aus Antennenausgangssignalen gebildeten Linearkombinationen die in einem Diversity-System einer Auswahl unterzogen werden, statistisch möglichst unabhängig voneinander sein, d.h. eine möglichst geringe Korrelation aufweisen. Diese Dekorrelation der Antennensignale ist beim vorliegenden Antennen-Empfangssystem, wenn über alle Fahrstrecken gemittelt wird, größer als bei herkömmlichen, so daß die Voraussetzungen für die Wirksamkeit des Diversity-Systems noch verbessert werden.

Theoretisch ergibt sich eine gute Dekorrelation der Antennensignale nur für aus niedrigen Erhebungen (bis ca. 30°) einfallende Wellen, d.h. im wesentlichen nur für Horizontal-Richtdiagramme. Diese Einschränkung hat aber für den praktischen Fall keine Bedeutung, da die weitaus meisten Wellen aus dem Horizontalbereich auf die Antennen gelangen. Darüber hinaus treten die hörbaren, zu unterdrückenden Störungen dann auf, wenn die reflektierten Wellen relativ große Umwege durchlaufen; diese Wellen finden sich aber in weit überwiegendem Maße ebenfalls in dem besagten Horizontal-Bereich mit einem Erhebungswinkel bis zu 30°, so daß alle diese Störungen durch das erfindungsgemäße Verfahren erfaßt und bei der Umschaltung der Diversity-Anlage berücksichtigt werden. Ein weiterer Grund, weshalb die Einschränkung für Erhebungswinkel bis ca. 30° ohne weiteres hingenommen werden kann, liegt darin, daß die Vertikal-Diagramme von Autoantennen relativ schwach strukturiert sind.

Gemäß einer bevorzugten Ausführungsform der Erfindung sind die Basisvektoren derart gewählt, daß

$$\int_{0}^{2\pi} |A(\varphi)| \cdot |B(\varphi)| \cdot d\varphi = \text{Minimum} \qquad (1)$$

gilt, wobei A ($\phi$) und B ($\phi$) die komplexen Richtdiagramme der Einzelantennen sind.

Erfindungsgemäß werden also zunächst die in dem zuvor angegebenen Sinne horizontalen Richtdiagramme für Einzelantennen des Antennensystems als komplexe absolute Größen, nämlich nach Betrag und Phase, gemessen. Dazu sind keinerlei Meßfahrten erforderlich, vielmehr werden die Richtdiagramme in einem festen Meßfeld, also praktisch unter Laborbedingungen ermittelt. Dies bedeutet, daß der Aufwand für die Ermittlung der Richtdiagramme wesentlich geringer ist als bei den herkömmlichen, Meßfahrten erfordernden Verfahren. Auch können sämtliche Alternativen hinsichtlich der Anbringung von Einzelantennen an den unterschiedlichen Fahrzeugtypen ohne großen Aufwand schnell ermittelt werden.

Das in Abhängigkeit vom Winkel $\varsigma$ erhaltene Richtdiagramm läßt sich ausdrücken durch die komplexe Funktion

$$A(\phi) = |A(\phi)| \bullet e^{jf(\varsigma)} \qquad (2)$$

Diese Einzeldiagramme werden danach einer Fourier-Analyse unterzogen. Bekanntermaßen ergibt sich dann eine Fourier'sche Reihe für das Richtdiagramm:

$$A(\varphi) = \sum_{n=-\infty}^{+\infty} a_n \cdot e^{jn\varphi} \qquad (3)$$

wobei $a_n$ die Fourier-Koeffizienten sind.

Abhängig vom Verhältnis der Fahrzeuggröße zur jeweiligen Wellenlänge ist die Strukturierung der Richtdiagramme nicht beliebig fein. Dies bedeutet, daß daher nur eine endliche Anzahl $a_n$ von Fourier-Koeffizienten vorliegt bzw. relevant ist. Bei den hier betrachteten systemen kann n beispeilsweise im UKW-Bereich 8 sein, wobei sich 17 Koeffizienten von $a_{-8}$ bis $+8$ und damit 17 Fourier-Glieder ergeben. Betrachtet man die zu einem Richtdiagramm gehörigen Fourier-Glieder als Vektor, so sind die in diesem Falle in einem 17-dimensionalen Raum dargestellt, in dem m Antennenvektoren einem m-dimensionalen Unterraum darstellen.

Die durch die Fourier-Analyse erhaltenen Feldmoden-Vektoren werden nun dazu herangezogen durch Linearkombination ein orthogonales, normiertes Basissystem des m-dimensionalen Unterraums zu bilden. Die Koeffizienten, die zur Bildung des orthonormierten Basissystems führen, sind gleichzeitig die Koeffizienten einer gesuchten Additionsmatrix, wobei die Koeffizienten im praktischen Fall gespeichert werden und daraus dann in der bekannnten Weise Linearkombinationen aus den Antennenausgangssignalen gebildet werden.

Grundsätzlich kann die Ausrichtung der Basisvektoren frei gewählt sein. Die beste Richtwirkung ergibt sich jedoch durch die besagte einschränkende Bedingung gemäß Gleichung (3). Bei Diversity-Systemen nach dem Auswahl-Prinzip führt eine dieser Bedingung unterliegende Additionsmatrix zu den besten Ergebnissen, vor allem zu höchstem Signalgewinn. Für das Antennenauswahl-Diversity-System ergibt sich somit die geringste Korrelation zwischen den einzelnen Richtdiagrammen und die Richtdiagramme überlappen sich weniger, da die Wahrscheinlichkeit, daß eine Antenne mehrere Wellen aufnimmt, mit der besagten Bedingung am geringsten ist. Durch die Bedingung dieser Ausführungsform des erfindungsgemäßen Verfahrens sind die Keulen der Richtdiagramme klein und die Wahrscheinlichkeit, daß die einfallenden Signale von mehreren Antennen aufgenommen werden, sind relativ gering, was gerade hinsichtlich des Mehrwegeempfangs von besonderem Vorteil ist.

Eine weitere Ausführungsform der Erfindung besteht darin, daß die synthetisierten Richtdiagramme nur eine Hauptkeule aufweisen. Auf diese Weise wird ein Mehrwegeempfang noch unwahrscheinlicher.

Handelt es sich jedoch um ein Diversity-System mit veränderlichen Linearkombinationen der Antennenspannungen, bei denen nur die Phasen gedreht werden, so ist es gemäß einer weiteren Ausführungsform der Erfin dung besonders vorteilhaft, wenn die Basisvektoren derart gewählt sind, daß

$$\int_0^{2\pi} |A(\varphi)| \, |B(\varphi)| \, d\varphi = \text{Maximum} \qquad (4)$$

gilt, wobei $A(\phi)$ und $B(\phi)$ die komplexen Richtdiagramme der Einzelantennen sind. Durch diese Bedingung ergeben sich optimale Richtdiagramme, ohne daß die Amplitudenbewertungen geändert werden müssen. Die Richtdiagramme weisen also für diesen Fall einen geringstmöglichen Gewinn auf und sind einem Runddiagramm angenähert. Bei Addition dieser nur in der Phase gedrehten, einem Runddiagramm angenäherten Diagramm lassen sich insbesondere im Zusammenhang mit adaptiven Arrays, wie sie beispielsweise in der denselben Anmeldetag aufweisenden deutschen Patentanmeldung P         beschrieben sind, optimale Richtdiagramme synthetisieren.

Gemäß einer weiteren vorteilhaften Ausgestalung der Erfindung ist der v-te Basisvektor durch Linearkombination des v-ten mit dem ersten bis (v-1) ten Feldmoden-Vektor gebildet, wobei v = 1, 2, ... m ist. Dadurch ergibt sich eine geringstmögliche Zahl von Addiervorgängen, so daß die Additionsmatrixschaltung in vorteilhafter Weise nur eine relativ kleine Zahl an Addierstufen aufzuweisen braucht und damit kostengünstig ist.

Eine weitere Ausführungsform der Erfindung ist dadurch gekennzeichnet, daß für jede Antenne je ein zusätzlicher Basisvektor für das Rauschverhalten der jeweiligen Antenne vorgesehen ist. Dadurch wird der sogenannte Rauschraum ebenfalls dem Diversity-Vorgang mitunterzogen, so daß das Antennen-Empfangssystem nicht nur in Abhängigkeit der Antennen-Nutzsignale, sondern auch in Abhängigkeit vom Pegel und der Rauschzahl der Einzelantennen auf andere Linearkombinationen umschaltet. Auf diese Weise ergibt sich durch Rauschminimierung eine weitere wesentliche Verbesserung des Diversity-Systems.

Beispielsweise in Tunneln sind häufig Leckkabel verlegt, die entsprechende Leckkabelsignale für den Rundfunkempfang in darin fahrenden Kraftfahrzeugen abgeben, um auch in derartigen mehr oder weniger abge schlossenen Umgebungen einen Rundfunkempfang zu ermöglichen. Gemäß einer weiteren Ausführungsform der Erfindung ist daher eine auf den optimalen Empfang von Leckkabelsignalen abgestimmte Linearkombination in der Additionsmatrix vorgesehen. Fährt ein Fahrzeug in einen Tunnel mit Leckkabeln für den Rundfunkempfang, so schaltet das Diversity-System auf eine Linearkombination um, die für den Empfang der Leckkabelsignale optimal ist. Der Empfang von Leckkabelsignalen ist dabei mit in dem erfindungsgemäßen Diversity-System integriert, ohne daß zusätzliche schaltungstechnische Maßnahmen erforderlich wären.

Gemäß einer weiteren Ausgestaltung der Erfindung wird bei Auftreten eines den Empfänger übersteuernden Signalpegels an einer der Antennen diese für das Empfangssystem deaktiviert, und durch Ändern der Matrixkoeffizienten ein neues optimal auf die verbleibenden Antennen abgestimmtes Basissystem gewählt. Dies ist insbesondere dann von Vorteil, wenn das Antennen-Empfangssystem, welches beispielsweise in einem Kraftfahrzeug eingebaut ist, sich in der Nähe eines Senders befindet und ein anderer, schwächerer bzw. entfernterer Sender empfangen werden soll. Das Antennen-Empfangssystem wird im Gesamtverhalten der auf diese Weise reduzierten Antennenzahl angepaßt.

Eine weitere vorteilhafte Ausgestaltung der Erfindung besteht darin, die Linearkombinationen aus den von den einzelnen Antennen abgegebenen Spannungen derart zu wählen, daß die vom Kraftfahrzeug selbst erzeugten Störsignale, beispielsweise durch Elektromotoren, für die Bildung der Linearkombinationen unterdrückt werden. Auf diese Weise werden mehr oder weniger bekannte, aus einer bestimmten Richtung kommende, fahrzeug- bzw. motoreigene Störsignale durch das Antennen-Empfanssystem optimal ausgeblendet und stören den eigentlichen Nutzsignalempfang nicht.

Eine weitere Ausführungsform der Erfindung besteht darin, daß auftretende Signalstörungen einer Statistischen Auswertung unterzogen und in Abhängigkeit vom Auswerteergebnis vorgegebene, einem Basissystem entsprechende Antennenkombinationen eingestellt werden. Durch die statistische Auswertung auftretender Signalstörungen etwa bei gewissen Antennenkombinationen können Rückschlüsse auf die gerade vorherrschende Umgebung des Empfangssystems bzw. des mit diesem Antennen-Empfangssystem ausgerüsteten Kraftfahrzeugs gezogen werden. Im Stadtbereich, in dem insbesondere Reflexionen an Gebäuden vorherrschen, treten im Mittel erheblich andere Signalstörungen auf, als bei Fahrten über flaches Land, und in den Bergen sind die Signalstörungen wieder anders. Durch eine statistische Auswertung der auftretenden Signalstörungen bei gewissen Antennenkombinationen lassen sich dadurch die unterschiedlichen Umgebungen erkennen und in Abhängigkeit davon kann die Auswahl der synthetisierten Antennenkombinationen diesen ermittelten Signalgegebenheiten angepaßt werden. Auf diese Weise ist es möglich, eine automatische Optimierung des Empfangs für beispielsweise Stadt- oder Überlandfahrten zu erzielen.

Eine Weiterbildung der Erfindung besteht darin, daß Steuersignale, die in Abhängig von Änderungen am Fahrzeug erzeugt werden, zur Änderung der Linearkombinationen herangezogen werden. Änderungen am Fahrzeug, die insbesondere auch das Antennensystem in seiner Funktion beeinflussen, sind zusätzliche Dachlasten, Anhängerkupplungen, Anhänger, offene Türen, Schiebedächer usw.. Steuersignale, die derartige Änderungen am Fahrzeug anzeigen, liegen häufig bereits vor, beispielsweise durch eingebaute elektrische Türschalter, bei angeschlossenen Anhängern usw.. Gegebenenfalls müßten zusätzliche elektrische Schalter beispielsweise an Schiebedächern angebracht werden, die ein der Fahrzeugänderung entsprechendes Signal, beispielsweise das Öffnen eines Schiebedachs anzeigen. Durch diese Maßnahme ist es möglich, beim erfindungsgemäßen Verfahren auch Änderungen des Antennen-Empfangssystems aufgrund von Änderungen am Fahrzeug zu berücksichtigen, so daß auch bei derartigen Fahrzeugänderungen ein optimaler Rundfunkempfang gewährleistet bleibt.

Eine weitere Ausführungsform der Erfindung besteht darin, daß eine Störerkennungsschaltung neben dem Umschalt-Schwellwert noch wenigstens einen Hilfs-Schwellwert aufweist. Bei nur einem Schwellwert kann es vorkommen, daß das Störsignal den Schwellwert zwar nicht erreicht, jedoch ständig in der Nähe des Schwellwerts liegt. Trotz eines dadurch relativ stark gestörten Empfangsignals erfolgt dann keine Umschaltung. Die besagte Ausgestaltung des erfindungsgemäßen Verfahrens ermöglicht es nun, mittels weiterer, unterhalb des eigentlichen Umschalt-Schwellwerts liegender Hilfs-Schwellwerte, festzustellen, ob das Störsignal häufig an den eigentlichen Umschalt-Schwellwert herankommt, so daß in Abhängigkeit davon bereits auf eine andere Linearkombination umgeschaltet werden kann, wenn der eigentliche Umschalt-Schwellwert zwar noch nicht überschritten wird, die Störsignale sich jedoch häufig diesem Schwellwert nähern. Auf diese Weise ist es auch möglich, zu verhindern, daß ein zu häufiges Umschalten oder ein Schwingen zwischen den verschiedenen Linearkombinationen auftritt. Durch zusätzliche Hilfs-Schwellwerte dieser Art lassen sich die Signale unterhalb der eigentlichen Umschaltschwelle statistisch auswerten und die Qualität der Einzelantennen oder einer Kombination von Einzelantennen kontinuierlich erfassen und überwachen, so daß eine zeitliche Bewertung durchgeführt werden kann, die es ermöglicht, Tendenzen zu stärkeren Störsignalen zu erfassen und schnell auf andere Linearkombinationen umzuschalten.

Eine weitere Entwicklung des erfindungsgemäßen Verfahrens besteht darin, daß dann, wenn nach Abfragen aller vorliegenden Basisvektoren eines Basissystems kein ausreichend gutes Linearkombinationssignal vorliegt, in ein anderes Basissystem umgeschaltet wird. Auf diese Weise wird der Empfang weiter verbessert. Es können also verschiedene unterschiedliche Basissysteme gespeichert sein, die je nachdem, ob ein gerade gewähltes Basissystem keine ausreichend guten Linearkombinationssignale enthält, abgerufen werden. Wie im Falle der zuvor beschriebenen statistischen Auswertung der Signalstörungen an Einzelantennen kann eine Statistik über die Qualität eines Basissystems auch in diesem Fall vorgenommen und in Abhängigkeit davon eine Umschaltung auf ein anderes Basissystem durchgeführt werden. Da, wie bereits erläutert, die Orientierung des Basissystems an sich völlig frei wählbar ist, ist es durch die Basissystem-Umschaltung möglich, Störsignale bzw. Störsender auf diese Weise auszublenden. Die Umschaltung kann durch Schalter oder Verändern der Matrix-Koeffizienten in der Additionsmatrix, ggf. rechnergesteuert, erfolgen.

Werden für die Additionsmatrix bestimmte Koeffizienten fest eingestellt, so gilt diese Einstellung nur für eine begrenzte Bandbreite. Gemäß einer Ausgestaltung der Erfindung kann diese Bandbreite dadurch erweitert werden, daß die Matrix-Koeffizienten frequenzabhängig eingestellt werden. Diese Einstellung kann entweder durch ein frequenzabhängiges Netzwerk oder durch eine prozessorgesteuerte Änderung einstellbarer Bauelemente vorgenommen werden.

Die Erfindung wird nachstehend anhand eines Ausführungsbeispiels für ein Kraftfahrzeugantennen-Empfangssystem mit mehreren einzelnen Empfangsantennen erläutert. Es zeigen:

Fig. 1 eine schematische Darstellung des Verfahrensablaufs mit drei Antennen,

Fig. 2 eine Additionsmatrix in schematischer Darstellung,

Fig. 3 eine schematische Darstellung eines Diversity-Systems unter Verwendung einer Additionsmatrix

Fig. 4 ein Ausführungsbeispiel für ein Element der Additionsmatrix, und

Fig. 5 eine weitere Ausführungsform für ein Element der Additionsmatrix.

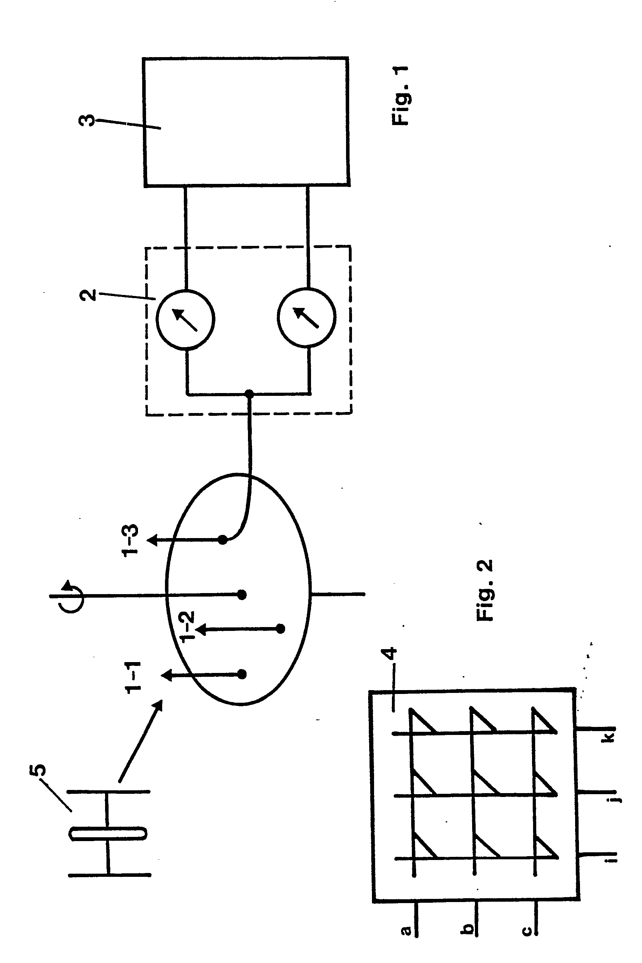

Wie in Fig. 1 schematisch dargestellt ist, empfangen die Empfangsantennen 1-1, 1-2 und 1-3 die von einem Sender 5 abgestrahlten Wellen. Die Ausgänge der Empfangsantennen 1-1, 1-2 und 1-3, die jeweils separate Fahrzeugantennen, wie Teleskopantennen, Scheibenantennen, usw. darstellen, sind mit einer Meßanordnung 2 verbunden, die das jeweilige Horizontal-Richtdiagramm der angeschlossenen Antenne 1-1, 1-2 bzw. 1-3 als komplexe absolute Größen nach Betrag $|A(\phi)|$ und Phase $f(\phi)$ gemäß der Gleichung

$$A(\phi) = |A(\phi)| \bullet e^{jf(\phi)} \qquad (2)$$

mißt. Die Fourier-Transformation entsprechend der Gleichung

$$A(\varphi) = \sum_{n=-\infty}^{+\infty} a_n \cdot e^{jn\varphi} \qquad (3)$$

erfolgt in einem Rechner 3. Dadurch ergeben sich die Feldmoden-Vektoren in komplexer Darstellung.

Der Rechner 3 leitet daraus weiter ein orthogonales, normiertes Basissystem ab, so daß sich die Koeffizienten einer in Fig. 2 schematisch dargestellten Additionsmatrix ergeben, die für das vorliegende Antennen-Empfangssystem abgespeichert werden.

Die Summen-Koppelpunkte, die in Fig. 2 schematisch als Verbindungspunkte der sich überkreuzenden Leitungen angedeutet sind, werden in Abhängigkeit von den ermittelten komplexen Matrix-Koeffizienten eingestellt. Matrixschaltungen zu diesem Zweck sind allgemein bekannt und beispielsweise in der bereits erwähnten EP-A2-0 201 977 beschrieben.

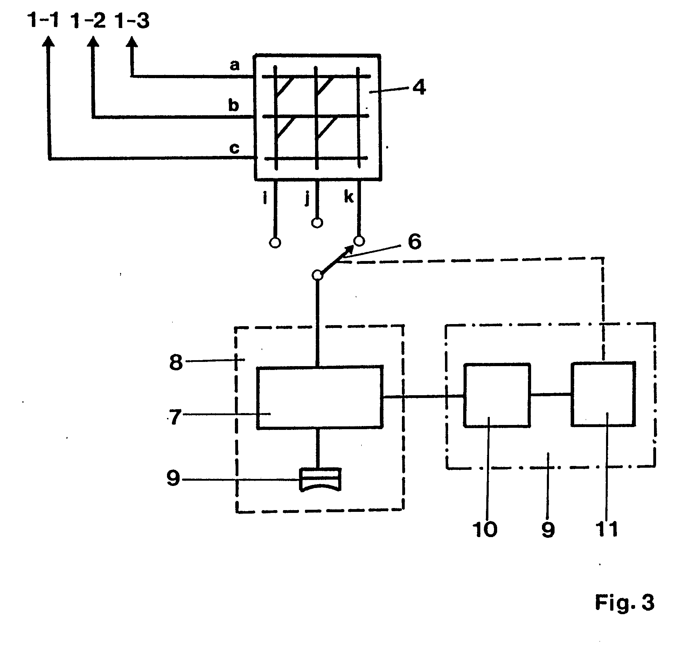

Wie in Fig. 3 dargestellt ist, werden nach Einstellung der Summen-Koppelpunkte der Additionsmatrix 4 deren Eingänge a, b, c an die Antennen 1-1, 1-2, 1-2 angeschlossen. Die Ausgänge i, j und k der Additionsmatrix 4 sind über einen elektronischen Schalter 6 mit der Empfangsschaltung 7 eines Rundfunkempfängers 8 verbunden. Das zwischenfrequente Empfangssignal wird der Empfangsschaltung 7 entnommen und einem Antennenumschaltgerät 9 zugeleitet, die einen Stördetektor 10 und einen Prozessor 11 umfaßt. In Abhängigkeit von einem entsprechenden Ausgangssignal des Stördetektors 10, das einen über einem bestimmten Schwellwert liegenden Störpegel anzeigt, schaltet der Prozessor 11 den elektronischen Schalter 6 auf eine andere Linearkombination von Antennenausgangssignalen für den Empfang um.

Anstelle eines Diversity-Systems mit Stördetektor 10 und Antennenumschaltgerät 9 kann auf die Ausgänge der Additionsmatrix 4 ein adaptives System folgen, wie es beispielsweise in der denselben Anmeldetag aufweisenden deutschen Patentanmeldung P      beschrieben ist.

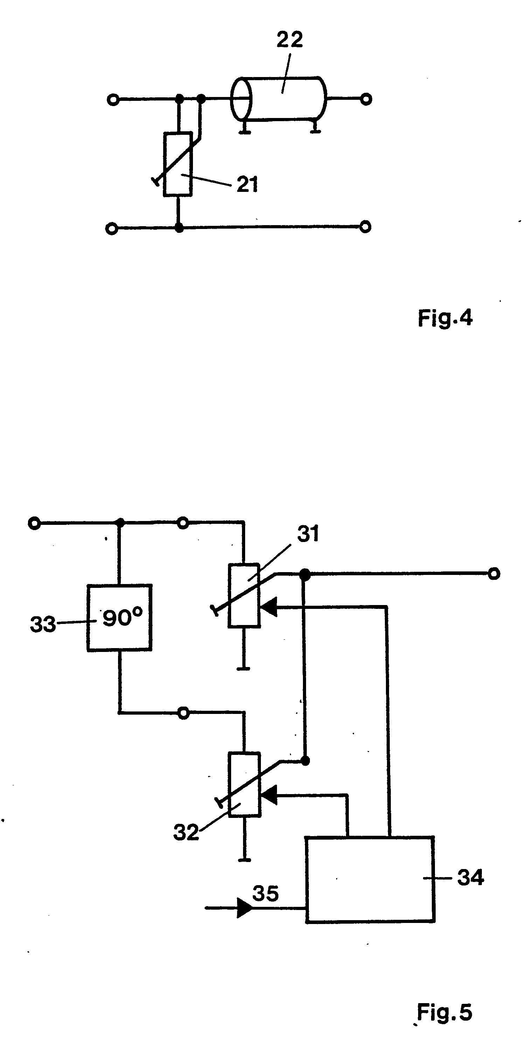

Fig. 4 zeigt ein Ausführungsbeispiel für ein Koppelelement der Additionsmatrix 4. Im Querzweig des Vierpols liegt ein einstellbarer Widerstand 21 als Amplitudenwichtungsglied bzw. zur Einstellung des Amplitudenbetrags, während im Längszweig eine Phasenschieberschaltung 22 vor gesehen ist.

Selbstverständlich sind auch andere Ausführungsformen für das Koppelelement realisierbar.

Fig. 5 zeigt z.B. eine Ausführungsform, bei der je ein veränderlicher Widerstand 31 für den Realteil und ein veränderlicher Widerstand 32 für den Imaginärteil vorgesehen sind, mit einem Anschluß jeweils an Masse liegen. Der andere Anschluß des Widerstands 31 für den Realteil erhält das Eingangssignal direkt, derjenige des Widerstands 32 für den Imaginärteil erhält das Eingangssignal über einen die Phase um 90° drehenden Phasenschieber 33 zugeleitet. Die jeweiligen Einstellungen der veränderlichen Widerstände 31 und 32 können über einen Prozessor 34 je nach den vorhandenen Anforderungen und Steuerungen verändert werden, wobei der Prozessor 34 beispielsweise mit dem in Fig. 3 dargestellten Prozessor 11 des Antennenzuschaltgeräts 9 identisch sein kann. Wie in Fig. 5 schematisch dargestellt ist, kann die Einstellung der Widerstände 31 und 32 der jeweiligen Summen-Koppelpunkte auch frequenzabhängig vorgenommen werden, indem dem Prozessor 34 hierfür ein die Frequenz enthaltendes Informationssignal über einen Eingang 35 zugeleitet wird.

Die Abwandlung und Ausgestaltung der einzelnen Verfahrensschritte ist dem Fachmann möglich, ohne daß er dadurch den Erfindungsgedanken verläßt. Auch ist es ihm möglich, die an sich bekannte Additionsmatrixschaltung sowie die Steuerung derselben ohne Verlassen des Erfindungsgedankens abzuwandeln und auszugestalten.

### Ansprüche

1. Verfahren zur Dimensionierung von Antennen-Empfangssystemen für mobilen Empfang mit mehreren einzelnen Empfangsantennen und einer Schaltungsanordnung, die mittels einer Additionsmatrix Linearkombinationen der von den einzelnen Antennen abgegebenen Spannungen erzeugt,
**dadurch gekennzeichnet, daß**
- die Horizontal-Richtdiagramme aller Einzelantennen in einem festen Meßfeld als komplexe absolute Größen gemessen werden,
- die Richtdiagramme durch Fourier-Analyse in ebenen Feldmoden-Vektoren ausgedrückt werden,
- aus den in dieser Weise ermittelten Feldmoden-Vektoren ein orthogonales, normiertes Basissystem abgeleitet wird, und
- die sich ergebenden Matrix-Koeffizienten zur Dimensionierung der Additionsmatrix verwendet werden.

2. Verfahren nach Anspruch 1, dadurch gekennzeichnet, daß die Basis-Vektoren derart gewählt sind, daß

$$\int_{0}^{2\pi} |A(\varphi)|\,|B(\varphi)|\,d\varphi = \text{Minimum}$$

gilt, wobei A ($\phi$) und B ($\phi$) die komplexen Richtdiagramme sind.

3. Verfahren nach Anspruch 1 und 2, dadurch gekennzeichnet, daß die synthetisierten Richtdiagramme nur eine Hauptkeule aufweisen.

4. Verfahren nach Anspruch 1, dadurch gekennzeichnet, daß die Basis-Vektoren derart gewählt sind, daß

$$\int_{0}^{2\pi} |A(\varphi)|\,|B(\varphi)|\,d\varphi = \text{Maximum}$$

gilt, wobei A ($\phi$) und B ($\phi$) die komplexen Richtdiagramme sind.

5. Verfahren nach einem der Ansprüche 1 bis 4, dadurch gekennzeichnet, daß der v-te Basis-Vektor durch Linearkombination des v-ten mit dem ersten bis (v-1) ten Feldmoden-Vektors gebildet ist, wobei v = 1,2,..., m ist, wobei m die Anzahl der Antennenvektoren ist.

6. Verfahren nach einem der Ansprüche 1 bis 5, dadurch gekennzeichnet, daß für jede Antenne je ein zusätzlicher Basis-Vektor für das Rauschverhalten der jeweiligen Antenne vorgesehen ist.

7. Verfahren nach einem der Ansprüche 1 bis 6, dadurch gekennzeichnet, daß eine auf den optimalen Empfang von Leckkabelsignalen abgestimmte Linearkombination in der Additionsmatrix vorgesehen ist.

8. Verfahren nach einem der Ansprüche 1 bis 7, dadurch gekennzeichnet, daß bei Auftreten eines den Empfänger übersteuernden Signalpegels an einer der Antennen diese Antenne für das Empfangssystem deaktiviert und durch Ändern der Matrix-Koeffizienten ein neues optimal auf die verbliebenen Antennen abgestimmtes Basissystem gewählt wird.

9. Verfahren nach einem der Ansprüche 1 bis 8, dadurch gekennzeichnet, daß die Linearkombinationen aus den von den einzelnen Antennen abgegebenen Spannungen derart gewählt sind, daß die vom Kraftfahrzeug selbst erzeugten Störsignale unterdrückt werden.

10. Verfahren nach einem der Ansprüche 1 bis 9, dadurch gekennzeichnet, daß auftretende Signalstörungen einer statistischen Auswertung unterzogen werden und in Abhängigkeit vom Auswerteergebnis vorgegebene, einem Basissystem entsprechende Antennenkombinationen eingestellt werden.

11. Verfahren nach einem der Ansprüche 1 bis 10, dadurch gekennzeichnet, daß Steuersignale, die in Abhängigkeit von Änderungen am Fahrzeug erzeugt werden, zur Änderung der Linearkombination herangezogen werden.

12. Verfahren nach einem der Ansprüche 1 bis 11, dadurch gekennzeichnet, daß eine Störerkennungsschaltung zusätzlich zu einem Umschalt-Schwellwert wenigstens einen Hilfs-Schwellwert aufweist.

13. Verfahren nach einem der Ansprüche 1 bis 12, dadurch gekennzeichnet, daß mehrere diskrete Basissysteme gespeichert sind und daß dann, wenn nach Abfragen aller vorliegenden Basis-Vektoren eines Basissystems kein ausreichend gutes Linearkombinationssignal vorliegt, in ein anderes Basissystem umgeschaltet wird.

14. Verfahren nach einem der Ansprüche 1 bis 13, dadurch gekennzeichnet, daß die Matrix-Koeffizienten frequenzabhängig eingestellt werden.

15. Verfahren nach Anspruch 14, dadurch gekennzeichnet, daß die frequenzabhängige Einstellung der Matrix-Koeffizienten durch ein frequenzabhängiges Netzwerk vorgenommen wird.

16. Verfahren nach Anspruch 14, dadurch gekennzeichnet, daß die frequenzabhängige Einstellung der Matrix-Koeffizienten durch einen Prozessor vorgenommen wird, der einstellbare Bauelemente in Abhängigkeit von der Frequenz ändert.

Fig. 1

Fig. 2

Fig. 3

EP 0 316 544 A1

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 201 977 (PHILIPS)<br>* Figur 2; Spalte 5, Zeilen 1-18;<br>Spalte 7, Zeile 47 - Spalte 8; Zeile 11<br>* | 1 | H 04 B 7/08 |
| Y | IEEE TRANS. ON ANTENNAS & PROPAGATION Band AP 29, Nr. 3, (1981) Mai, Seiten 496-501, New York; M. UENO: "A Systematic Design Formulation for Butler Matrix Applied FFT Algorithm" * Zusammenfassung * | 1 | |
| A | US-A-4 173 759 (K. BAKHRU)<br>* Figur 4, Zusammenfassung * | | |
| A | GB-A-2 111 311 (STANDARD TELEPHONES AND CABLES)<br>* Figur 1, Zusammenfassung * | | |

| RECHERCHIERTE SACHGEBIETE (Int. Cl.4) |
|---|
| H 04 B 7/08<br>H 01 Q 3/40<br>H 01 Q 3/26 |

Der vorliegende Recherchenbericht wurde für alle Patentansprüche erstellt

| Recherchenort | Abschlußdatum der Recherche | Prüfer |
|---|---|---|
| BERLIN | 25-01-1989 | BREUSING J |